# EUROPÄISCHE PATENTSCHRIFT

(11) **EP 1 970 878 B1**
(45) Veröffentlichungstag und Bekanntmachung des Hinweises auf die Patenterteilung: **02.04.2014**
(21) Anmeldenummer: 08004132.0
(22) Anmeldetag: 06.03.2008
(51) Int. Cl.: G09B 23/28

(54) **Übungsmodell**
Practice model
Modèle d'entraînement

(30) Priorität: 16.03.2007 DE 202007003879 U
(43) Veröffentlichungstag der Anmeldung: 17.09.2008
(73) Patentinhaber: Franz Sachs GmbH & Co. KG, 88069 Tettnang (DE)
(72) Erfinder: Schulz, Bernhardt Peter, 88149 Nonnenhorn (DE); Woidschützke, Horst, 88239 Wangen (DE)
(74) Vertreter: Riebling, Peter

(56) Entgegenhaltungen:
- DE-A1- 4 024 505
- DE-C1- 19 917 759
- DE-U1- 9 400 136
- FR-A- 2 640 787
- US-A- 4 902 232
- US-A1- 2004 191 739

## Beschreibung

Die Erfindung bezieht sich auf ein Übungsmodell zur Aufnahme von Lehrzähnen, an denen zahnmedizinische Arbeiten ausführbar sind, bestehend aus einer gebissartig geformten, an einem Artikulator oder an einem Phantomkopf zu befestigenden Schale, in der auswechselbar die Lehrzähne eingesetzt sind und die auf der den Lehrzähnen zugekehrten Seite durch einen Boden abgedeckt ist.

Bei den bekannten Kiefermodellen dieser Art sind die Lehrzähne am Boden der Schale einzeln angeschraubt. Für unterschiedliche Zahnsätze sind somit jeweils gesonderte Schalen erforderlich, so dass bei der Einrichtung von Ausbildungsplätzen nicht nur die Investitionskosten erheblich sind, sondern auch eine Vielzahl von Übungsmodellen bereitgehalten werden muss, um einen störungsfreien Arbeitsablauf zu gewährleisten. Des Weiteren ist ein Austausch eines Lehrzahnes sehr aufwendig, da die Schraubverbindung zwischen diesem und dem Boden zu lösen und zur Halterung eines neues Lehrzahnes wiederum eine Schraubverbindung herzustellen ist. Die bekannten Übungsmodelle sind daher nicht in optimaler Weise einsetzbar.

Die US 2004/0191739 A1 zeigt in Figur 9 und 11 eine dem Ober- oder Unterkiefer nachgebildete, hufeneisenförmige Schale 210, in der die Einsatzteile 204, 205, 206 mit Hilfe von seitlichen Befestigungsbügeln lösbar befestigt sind, wobei in den Einsatzteilen Ausnehmungen für die dort auswechselbar aufzunehmenden Lehrzähne angeordnet sind.

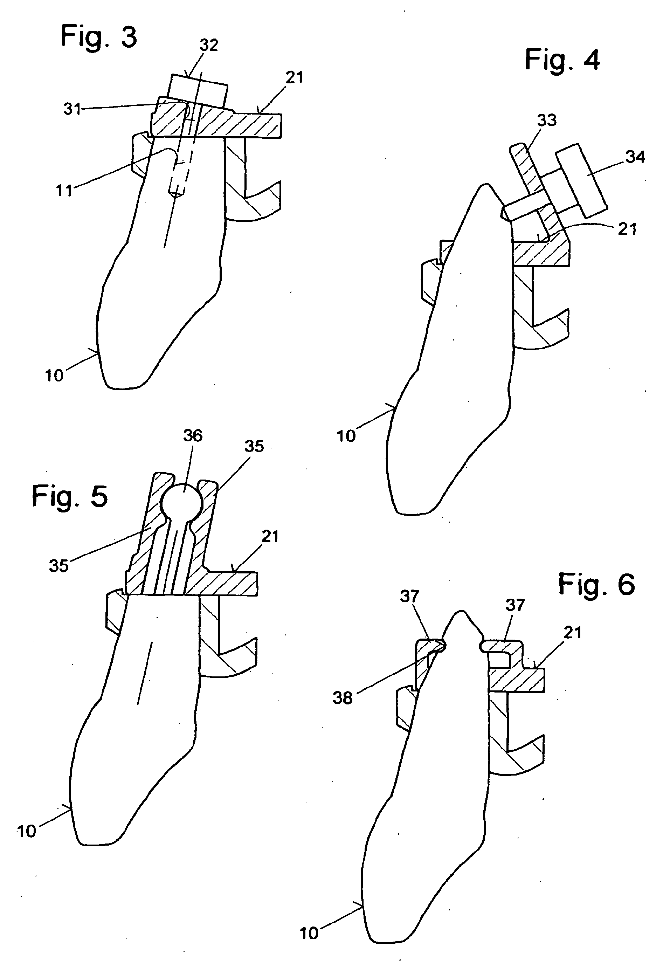

Gemäß Figur 4 und 8 wird jeder Lehrzahn 126 mit seinem distalen Ende in eine Hülse 112 eingegossen, wobei an der Wurzelspitze noch zusätzlich eine weitere Einsatzhülse 134 eingegossen sein kann.

Der Lehrzahn 113 ist in der Einschubhülse 134 lösbar befestigt. Die Einschubhülse ist in eine konische Hülse 112 eingesteckt und wird seitlich - senkrecht zur Längsachse des Lehrzahnes - mit Hilfe eines Sicherungsstiftes 160 in einer Querbohrung festgelegt.

Die lösbare Befestigung der Lehrzähne nach der Druckschrift US 20004/0191739 A1 besteht demnach aus zwei ineinander greifenden Hülsen, wobei in der äußeren Hülse ein Sicherungsstift 160 angeordnet ist, der die äußere Hülse und das Einsatzteil durchsetzt und der mit seiner Spitze in die innere Hülse hineingreift, so dass die Hülse 112 auswechselbar im Sockel 111 gehalten ist.

Damit besteht der Nachteil, dass die lösbaren, stiftartigen Halteglieder nur schwer zugänglich sind, denn um überhaupt die Zugänglichkeit von der Seite des Gaumens zu ermöglichen, müssen sie einen abgeflachten Kopf aufweisen und können lediglich als Steckstift ausgebildet sein.

In der Druckschrift DE 199 17 759 C1 ist - wie in der Druckschrift US 2004/0191739 A1 gezeigt - eine quer verlaufende Befestigung 2 der Lehrzähne mit Hilfe von in Bohrungen 17 eingreifenden, quer verlaufenden Querstiften 3 gezeigt. Somit sind die Querstifte schwer zugänglich, weil sie seitlich angeordnet sind und vermögen keine hohen Befestigungskräfte zu erzeugen.

Die gleiche Kritik gilt für die Druckschrift DE 94 00 136 U1, weil dort die Lehrzähne 20 in hülsenförmige Aufnahmeglieder 3 aufgenommen sind, die in den Aufnahmeräumen eingeklebt sind. Es handelt sich nicht um eine auswechselbare Halterung von Lehrzähnen.

In der Druckschrift DE 40 24 505 A1 wird jeder Lehrzahn mit einem in axialer Richtung des Lehrzahnes verlaufenden Halteglied aufgenommen, ohne dass eine Schale mit einer hufeisenförmig ausgebildeten Trägerplatte gezeigt ist, mit der es möglich ist, eine Vielzahl von Lehrzähnen auf einer Trägerplatte zu befestigen und gemeinsam auszuwechseln.

Die Lehrzähne 3, 3' sind jeweils mit einer Schraube 14 unmittelbar am Sockel 2 auswechselbar befestigt. Die Schrauben 14 sind elektrisch leitfähig an einen elektrischen Stromkreis 21 angeschlossen. Es fehlt demnach die auswechselbare Befestigung der Lehrzähne an einer Trägerplatte, die auf dem Boden einer Schale befestigbar ist.

Aus der Druckschrift FR 2640787A ist lediglich eine Halterung von Lehrzähnen mit Hilfe von Sicherungsschrauben gezeigt, die in einer Querbohrung angeordnet sind.

Die Druckschrift US 4,902,232 zeigt nach Figur 1 einen älteren Stand der Technik, mit dem ein Lehrzahn an seinem proximalen Ende mit Hilfe einer Gewindeschraube 16 in einer Schale 14 befestigt ist. Es fehlt jedoch die gemeinsame Befestigung einer Vielzahl von Lehrzähnen im Bereich einer Trägerplatte, die ihrerseits im Bodenbereich der Schale angeordnet ist. Es besteht daher der Nachteil, dass für unterschiedliche Zahnsätze somit jeweils gesonderte Schalen erforderlich sind, so dass eine Vielzahl von Übungsmodellen bereitgehalten werden muss, um einen störungsfreien Arbeitsablauf zu gewährleisten. Des Weiteren ist ein Austausch eines Lehrzahnes sehr aufwendig, da die Schraubverbindung zwischen diesem und dem Boden zu lösen und zur Halterung eines neues Lehrzahnes wiederum eine Schraubverbindung herzustellen ist.

Der Erfindung hat ausgehend von der US 2004/0191739 A1 die Aufgabe, ein Übungsmodell zur Aufnahme von Lehrzähnen der eingangs genannten Art so weiterzubilden, dass eine wesentlich sicherere Befestigung der Lehrzähne in der dem Ober- oder Unterkiefer nachgebildeten, hufeisenförmigen Schale gewährleistet ist und dass es möglich ist, auch auf engstem Raum eine Vielzahl, auch nebeneinander liegender, Lehrzähne auswechselbar zu halten und dass ferner ein ganzer Zahnsatz leicht auswechselbar bereit gehalten werden kann.

Aufgabe der Erfindung ist es demnach, ein Übungsmodell der vorgenannten Gattung derart weiter zu bilden, dass in dieses unterschiedliche Lehrzähne leicht und in kurzer Zeit einzusetzen und zu befestigen sind. Ein Wechsel eines Zahnsatzes in einem Übungsmodell soll somit auf einfache Weise vorgenommen werden können, ohne dass eine Vielzahl an Schalen zu bevorraten ist. Vielmehr sollen die zu bearbeitenden Lehrzähne in bereits vorhandene Schalen ohne Schwierigkeiten zu arretieren sein, so dass stets die jeweils zu bearbeitenden Lehrzähne kurzfristig zur Verfügung gestellt werden können.

Gemäß der Erfindung wird dies dadurch erreicht, dass zur Abstützung der Lehrzähne eine etwa hufeisenförmig ausgebildete Trägerplatte vorgesehen ist, die in der Schale angeordnet und auf deren Boden befestigbar, ist und dass die Trägerplatte mit den Lehrzähnen zugeordneten Haltegliedern zur Befestigung der Lehrzähne versehen ist.

Zweckmäßig ist es hierbei, die Trägerplatte über jeweils mindestens drei vorzugsweise als Distanzhülsen ausgebildete Abstandshalter auf dem Boden der Schale abzustützen, wobei die Abstandshalter, angepasst an die in die Trägerplatte einzusetzenden Lehrzähne, unterschiedlich lang bemessen sein sollten.

Die an der Tragplatte vorgesehenen Halteglieder zur Befestigung der Lehrzähne können in Form von Schraubkanälen oder Spannstegen, in denen jeweils eine auf einen Lehrzahn einwirkende Spannschraube einsetzbar ist, oder als Raststege, die einen an dem Lehrzahn angeformten oder angebrachten Kugelkopf aufnehmen oder die in eine an dem Lehrzahn angearbeitete Hinterschneidung eingreifen, versehen sein.

Wird ein Übungsmodell gemäß der Erfindung ausgebildet, so ist es möglich, in eine Schale unterschiedliche Zahnsätze, beispielsweise Zahnsätze mit anatomisch geformter oder erheblich vereinfachter Form der Zahnwurzel einzusetzen und in dieser auf einfache Weise aber dennoch sicher zu befestigen. Die Zahnsätze können gegebenenfalls mit zusätzlichen Verriegelungseinrichtungen ausgestaltet sein, um diese zuverlässig zu fixieren.Die Lehrzähne sind nämlich lediglich an der mit dem Boden der Schale fest verbindbaren Trägerplatte anzubringen, die dazu mit unterschiedlich gestalteten Haltegliedern versehen sein kann. Auch kann die Trägerplatte mit unterschiedlichen Abständen zum Boden der Schale angeordnet werden, so dass unterschiedlich lang bemessene Lehrzähne in ein und derselben Trägerplatte zu fixieren sind. Bei einem Wechsel eines Zahnsatzes ist demnach gegebenenfalls nur die Trägerplatte auszutauschen, um in kurzer Zeit ein andersartiges Kiefermodell zur Verfügung stellen zu können. Mit Hilfe der zusätzlich vorgesehenen Trägerplatte wird somit die Bevorratung von Übungsmodellen in einem erheblichen Maße reduziert, auch erlauben die an dieser angebrachten Halteglieder einen raschen Wechsel von Lehrzähnen.

In der Zeichnung ist ein Ausführungsbeispiel des gemäß der Erfindung ausgebildeten Übungsmodells dargestellt, das nachfolgend im Einzelnen erläutert ist. Hierbei zeigt:
- Fig. 1: das Übungsmodell mit an einer Trägerplatte angebrachten Lehrzähnen, in einer perspektivischen Darstellung,
- Fig. 2: das Übungsmodell nach Fig. 1, in einer Explosionsdarstellung, und
- Fig. 3 bis 6: unterschiedlich ausgebildete, an der Trägerplatte des Übungsmodells nach Fig. 1 vorgesehene Halteglieder zur Arretierung der Lehrzähne.

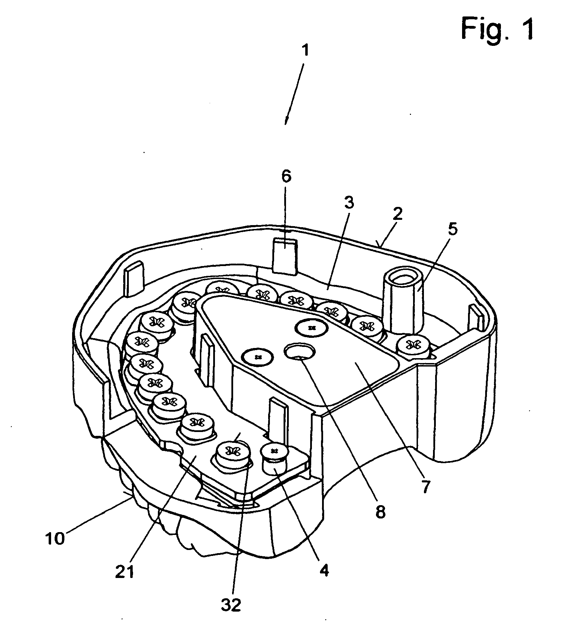

Das in Figur 1 dargestellte und mit 1 bezeichnete Übungsmodell dient zur Durchführung von zahntechnischen und zahnmedizinischen Arbeiten an Lehrzähnen 10, die in dem Übungsmodell 1 eingesetzt sind, und besteht im Wesentlichen aus einer gebissartig geformten Schale 2, die auf der den Lehrzähnen 10 zugekehrten Seite durch einen Boden 3 verschlossen ist, und einer Trägerplatte 21, in der die Lehrzähne 10 gehalten sind. Zur Befestigung der Trägerplatte 21 an dem Boden 3 ist diese mit mehreren, mit Schraubkanälen ausgestatteten Ansätzen 4 versehen, die von Befestigungsschrauben 12 durchgriffen werden. Des Weiteren ist die Schale 2 mit Haltern 5 zur Aufnahme von Fixierstiften und Stegen 6, an denen ein ebenfalls nicht dargestellter Deckel abgestützt ist, ausgestattet. Mittels einer Platte 7, die dazu eine Bohrung 8 aufweist, ist das Übungsmodell 1 zum Beispiel an einem Phantomkopf zu befestigen.

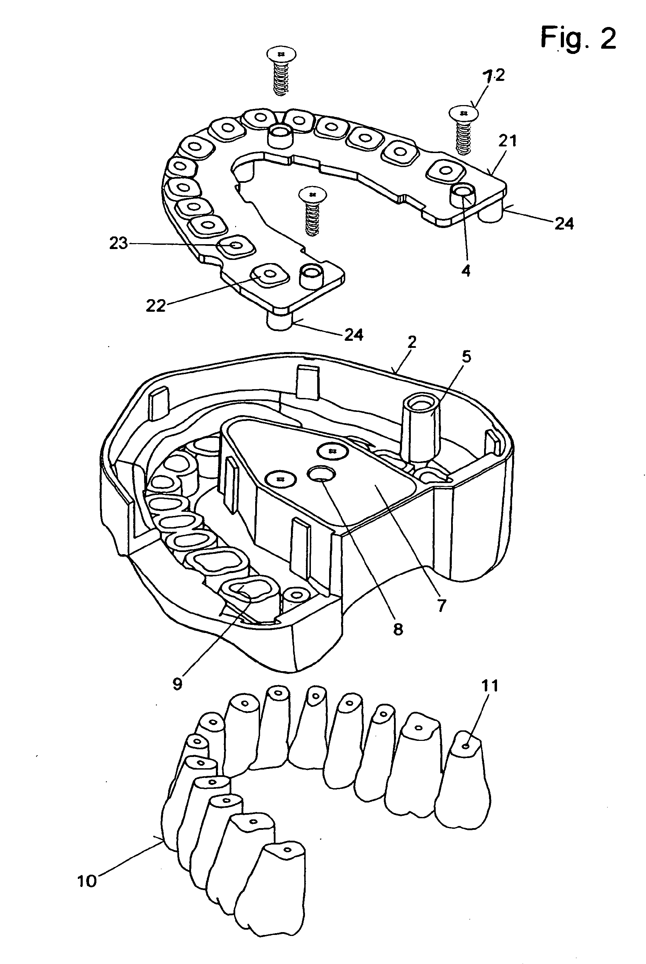

Die Lehrzähne 10, die aus Kunststoff, Metall oder Keramik bestehen können und jeweils an in die Trägerplatte 21 eingeformte, mit Durchgangsbohrungen 23 versehene Aufnahmen 22 abgestützt sind und in dem Boden 3 vorgesehene Zahnkanäle 9 durchgreifen, sind bei dem Ausführungsbeispiel nach den Figuren 1,2 und 3 mittels Spannschrauben 32 als Halteglieder befestigt. Dazu sind in die Trägerplatte 21 Schraubkanäle 31 und in die Lehrzähne 10 Gewindebohrungen 11 eingearbeitet, so dass sich die Spannschrauben 32 an der Trägerplatte 21 abstützen und die Lehrzähne 10 sicher an dieser befestigt sind.

Bei der Ausgestaltung nach Figur 4 sind zur Verspannung der Lehrzähne 10 in der Trägerplatte 21 an dieser Spannstege 33 als Halteglieder angeformt, in die jeweils eine schräg auf die Lehrzähne 10 einwirkende Spannschraube 34 eingesetzt ist. Die Lehrzähne 10 werden somit durch die Spannschrauben 34 gegen die Trägerplatte 21 gedrückt und mit dieser verspannt.

Bei den Ausführungsvarianten nach den Figuren 5 und 6 dienen zur Befestigung der Lehrzähne 10 paarweise einander gegenüberliegend angeordnete Raststege 35 bzw. 37 als Halteglieder, zwischen die an den Lehrzähnen 10 angeformte Kugelköpfe 36 eingreifen bzw. die in die Lehrzähne 10 eingearbeitete Hinterschneidungen 38 einrasten.

Jedes der an der Trägerplatte 21 vorgesehene Halteglied ermöglicht ein rasches Auswechseln der Lehrzähne 10, dennoch ist stets eine sichere Abstützung an der Trägerplatte 21 gewährleistet.

Um auch unterschiedlich gestaltete Zahnsätze in der Schale 2 des Übungsmodells 1 einsetzen zu können, kann die Trägerplatte 21 auf der dem Boden 3 zugekehrten Seite mit Distanzhaltern 24 versehen sein, die je nach Größe der Lehrzähne unterschiedlich lang bemessen sind. Auf diese Weise kann der Abstand zwischen der Trägerplatte 21 und dem Boden 3 gewählt und an die jeweilige Zahnform angepasst werden.

## Patentansprüche

1. Übungsmodell (1) zur Aufnahme von Lehrzähnen (10), an denen zahnmedizinische Arbeiten ausführbar sind, bestehend aus einer gebissartig geformten, an einem Artikulator oder an einem Phantomkopf zu befestigenden, einem Ober- oder Unterkiefer nachgebildeten, hufeisenförmigen Schale (2), die Ausnehmungen aufweist, in denen auswechselbar die Lehrzähne (10) eingesetzt sind und die auf der den Lehrzähnen (10) zugekehrten Seite durch einen Boden (3) abgedeckt ist, wobei die Lehrzähne (10) mit lösbaren Haltegliedern (31, 33, 35, 37) in der Schale (2) festgelegt sind,
**dadurch gekennzeichnet, dass** die Schale (2) einen rückseitigen, nach hinten geöffneten hufeisenförmigen Aufnahmeraum ausbildet, in dessen Boden (2) die Ausnehmungen für den Einsatz der Lehrzähne angeordnet sind,
dass zur Halterung der Lehrzähne (10) in der Schale (2) eine etwa hufeisenförmig ausgebildete Trägerplatte (21) auf dem Boden (3) der Schale (2) befestigbar ist,
und dass die Trägerplatte (21) das Gegenlager für die sich an der Rückseite der Trägerplatte anlegenden Halteglieder (31; 33; 35; 37) zur Befestigung der Lehrzähne (10)ausbildet.

2. Übungsmodell nach Anspruch 1, **dadurch gekennzeichnet, dass** die Trägerplatte (21) über jeweils mindestens drei vorzugsweise als Distanzhülsen ausgebildete Abstandshalter (24) auf dem Boden (3) der Schale (2) abgestützt ist.

3. Übungsmodell nach Anspruch 2, **dadurch gekennzeichnet, dass** die Abstandshalter (24) angepasst an die in die Trägerplatte (21) einzusetzenden Lehrzähne (10) unterschiedlich lang bemessen sind.

4. Übungsmodell nach einem oder mehreren der Ansprüche 1 bis 3, **dadurch gekennzeichnet, dass** in der Trägerplatte (21) Schraubkanäle (31) angeordnet sind, in denen jeweils eine auf einen Lehrzahn (10) einwirkende Spannschraube (32) einsetzbar ist, die mit ihrem bolzenseitigen Gewinde in eine Gewindebohrung an der Rückseite des Lehrzahns (10) eingreift.

5. Übungsmodell nach einem oder mehreren der Ansprüche 1 bis 3, **dadurch gekennzeichnet, dass** an der Trägerplatte (21) Spannstege (33) angeordnet sind, welche jeweils von einer auf den Lehrzahn (10) einwirkende Spannschraube (34) durchsetzt sind, wobei sich der Gewindebolzen der Spannschraube (34) am freien schwenkbaren Teil des Lehrzahns (10) abstützt, der dadurch in der Trägerplatte (21) und der Aufnahme im Übungsmodell (1) verkeilt ist, (Fig. 4).

6. Übungsmodell nach einem oder mehreren der Ansprüche 1 bis 3, **dadurch gekennzeichnet, dass** an der Trägerplatte (21) Raststege (35, 37) angeordnet sind, die einen an dem Lehrzahn (10) angeformten oder angebrachten Kugelkopf (36) aufnehmen, (Figur 5).

7. Übungsmodell nach einem oder mehreren der Ansprüche 1 bis 3, **dadurch gekennzeichnet, dass** an der Trägerplatte (21) Raststege (35, 37) angeordnet sind, die in eine jeweils am Lehrzahn (10) angearbeitete Hinterschneidung (38) eingreifen. (Figur 6)

## Claims

1. Practice model (1) for receiving training teeth (10), on which dentistry work can be carried out, consisting of a shell (2), which is shaped like a set of teeth, is to be fastened to an articulator or a phantom head, simulates an upper or lower jaw, is horseshoe-shaped and has recesses, in which the training teeth (10) are exchangeably inserted, and which shell is covered by a base (3) on the side facing the training teeth (10), the training teeth (10) being fixed by releasable holding elements (31, 33, 35, 37) in the shell (2), **characterised in that** the shell (2) has a rear horseshoe-shaped receiving space, which is open toward the rear and in the base (2) of which the recesses to insert the training teeth are arranged, **in that** to hold the training teeth (10) in the shell (2), an approximately horseshoe-shaped carrier plate (21) can be fastened to the base (3) of the shell (2), and **in that** the carrier plate (21) forms the counter-bearing for the holding elements (31; 33; 35; 37) placed on the rear of the carrier plate to fasten the training teeth (10).

2. Practice model according to claim 1, **characterised in that** the carrier plate (21) is supported by at least three respective spacer holders (24), preferably configured as spacer sleeves, on the base (3) of the shell (2).

3. Practice model according to claim 2, **characterised in that** the spacer holders (24) have different lengths adapted to the training teeth (10) to be inserted in the carrier plate (21).

4. Practice model according to any one or more of claims 1 to 3, **characterised in that** screw channels (31) are arranged in the carrier plate (21), in which screw channels a respective clamping screw (32) acting on a training tooth (10) can be inserted, said clamping screw engaging with its bolt-side thread in a thread bore on the rear of the training tooth (10).

5. Practice model according to any one or more of claims 1 to 3, **characterised in that** clamping webs (33) are arranged on the carrier plate (21) and in each case have a clamping screw (34) that acts on the training tooth (10) passing through them, the thread bolt of the clamping screw (34) being supported on the free pivotable part of the training tooth (10), which is thereby wedged in the carrier plate (21) and the receiver in the practice model (1) (Fig. 4).

6. Practice model according to any one or more of claims 1 to 3, **characterised in that** latching webs (35, 37), which receive a ball head (36) formed or attached on the training tooth (10), are arranged on the carrier plate (21) (Fig. 5).

7. Practice model according to any one or more of claims 1 to 3, **characterised in that** latching webs (35, 37), which engage in an undercut (38) worked onto the training tooth (10) in each case, are arranged on the carrier plate (21) (Fig. 6).

## Revendications

1. Modèle d'entraînement (1) pour recevoir des dents pour l'enseignement (10) sur lesquelles des travaux dentaires peuvent être réalisés, composé d'une coque (2) en fer à cheval en forme de denture, qui est à fixer à un articulateur ou à une tête fantôme, qui imite une mâchoire supérieure ou inférieure, qui présente des creux dans lesquels les dents d'enseignement (10) sont insérées de manière échangeable et qui est couverte par un fond sur le côté tourné vers les dents (10), étant précisé que les dents pour l'enseignement (10) sont fixées dans la coque (2) à l'aide d'organes de fixation amovibles (31, 33, 35, 37),
**caractérisé en ce que** la coque (2) forme un logement arrière en fer à cheval, ouvert vers l'arrière, dans le fond (3) duquel sont disposés les creux pour l'insertion des dents pour l'enseignement,
**en ce que** pour tenir les dents (10) dans la coque (2), une plaque de support à peu près en fer à cheval (21) est apte à être fixée sur le fond (3) de la coque (2),
et **en ce que** la plaque de support (21) forme l'appui pour les organes de fixation (31 ; 33 ; 35 ; 37) qui s'appliquent contre le côté arrière de la plaque de support, en vue de fixer les dents (10).

2. Modèle d'entraînement selon la revendication 1, **caractérisé en ce que** la plaque de support (21) est en appui sur le fond (3) de la coque (2) par l'intermédiaire d'au moins trois pièces d'écartement (24) qui sont conçues de préférence comme des manchons d'écartement.

3. Modèle d'entraînement selon la revendication 2, **caractérisé en ce que** les pièces d'écartement (24) ont des longueurs différentes en fonction des dents (10) à insérer dans la plaque de support (21).

4. Modèle d'entraînement selon l'une au moins des revendications 1 à 3, **caractérisé en ce qu'**il est prévu dans la plaque de support (21) des conduits de vissage (31) dans chacun desquels peut être insérée une vis de serrage (32) qui agit sur une dent (10) et qui pénètre avec son filetage prévu côté boulon dans un perçage fileté, sur le côté arrière de la dent (10).

5. Modèle d'entraînement selon l'une au moins des revendications 1 à 3, **caractérisé en ce qu'**il est prévu sur la plaque de support (21) des pattes de serrage (33) qui sont traversées chacune par une vis de serrage (34) agissant sur la dent pour l'enseignement (10), étant précisé que le boulon fileté de la vis de serrage (34) s'appuie contre la partie pivotante libre de la dent (10), laquelle partie est ainsi calée dans le modèle d'entraînement (1) dans la plaque de support (21) et dans le logement (fig. 4).

6. Modèle d'entraînement selon l'une au moins des revendications 1 à 3, **caractérisé en ce qu'**il est prévu sur la plaque de support (21) des pattes d'enclenchement (35, 37) qui reçoivent une tête sphérique (36) rapportée ou installée sur la dent (10) (fig. 5).

7. Modèle d'entraînement selon l'une au moins des revendications 1 à 3, **caractérisé en ce qu'**il est prévu sur la plaque de support (21) des pattes d'enclenchement (35, 37) qui pénètrent dans une contre-dépouille (38) réalisée sur la dent (10) (fig. 6).
